# EUROPÄISCHE PATENTANMELDUNG

(11) **EP 1 178 346 A2**
(43) Veröffentlichungstag der Anmeldung: **06.02.2002**
(21) Anmeldenummer: 01114609.9
(22) Anmeldetag: 19.06.2001
(51) Int. Cl.: G02B 27/28, H04N 1/04

(54) **Polarisierender Lichtstrahl-Kombinierer sowie Vorrichtungen mit polarisierenden Lichtstrahl-Kombinierern**

(30) Priorität: 03.08.2000 DE 10037947
(71) Anmelder: Agfa-Gevaert AG, 51373 Leverkusen (DE)
(72) Erfinder: Fleck, Adolf, 82008 Unterhaching (DE); Kersten, Peter, 81543 München (DE)

(57) **Zusammenfassung**

Die Erfindung betrifft einen polarisierenden Lichtstrahl-Kombinierer mit zwei entlang der jeweiligen Hypotenusefläche miteinander verbundenen Dreiecksprismen, wobei das erste Dreiecksprisma eine Lichteintrittsfläche und das zweite Dreickecksprisma sowohl eine Lichteintrittsfläche als auch Lichtaustrittsfläche aufweist. Erfindungsgemäß ist der Winkel (α) zwischen den beiden Schenkelflächen eines jeden Dreiecksprismas ungleich 90°.

## Beschreibung

Die Erfindung betrifft einen polarisierenden Lichtstrahl-Kombinierer nach dem Oberbegriff des Anspruches 1 und Vorrichtungen mit polarisierenden Lichtstrahl-Kombinierern nach Anspruch 9 und 10.

Aus der DE 41 32 025 C2 ist eine Vorrichtung zur Ablenkung eines Lichtstrahls, die ein bezüglich einer Rotationsachse drehbar gelagertes Prisma, eine Spiegelfläche und eine Reflexionsfläche mit von dem Einfallswinkel des Lichtstrahls abhängigen Reflexions- und Transmissionseigenschaften aufweist, bekannt. Hierbei setzt sich das Prisma aus einem Einlaß-Prisma und einem Auslaß-Prisma zusammen, wobei diese beiden Prismen sich bezüglich der Drehachse im Wesentlichen zu einer symmetrischen Massenverteilung ergänzen. Das Einlaß-Prisma weist eine quer zur Rotationsachse verlaufende Lichteintrittsfläche für den Einfall-Lichtstrahl und das Auslaß-Prisma eine im Wesentlichen in Richtung der Rotationsachse verlaufende Lichtaustrittsfläche für den abgelenkten Lichtstrahl auf. Die Reflexionsfläche ist an den quer zur Rotationsachse verlaufenden, sich gegenüberliegenden Grenzflächen von Einlaß-Prisma und Auslaß-Prisma angeordnet. Hierbei ist die Anordnung von Reflexionsfläche und Spiegelfläche derart getroffen, daß der in Richtung der Drehachse durch die Lichteintrittsfläche durchtretende Lichtstrahl in Abhängigkeit vom Einfallswinkel entweder von der Reflexionsfläche auf die Spiegelfläche reflektiert oder durch die Reflexionsfläche zur Spiegelfläche durchgelassen wird. Zudem wird der von der Spiegelfläche kommende Lichtstrahl entweder durch die Reflexionsfläche zur Lichtaustrittsfläche durchgelassen oder von der Reflexionsfläche auf die Lichtaustrittsfläche reflektiert.

Ferner ist aus dem Produktkatalog der Firma Newport GmbH, Seite N-91, 1990, ein polarisierender würfelförmiger Lichtstrahl-Kombinierer bekannt, welcher aus einem an den Diagonalen zusammengekitteten Prismenpaar besteht. Hierbei sind die Prismen präzise poliert und verbunden, um eine nur minimale Wellenfrontzerstörung zu gewährleisten. Dieser Kombinierer ist insbesondere für den Einsatz bei fokussierten Strahlen, Experimenten mit gepulsten Lasern oder für die Polarisationsreinigung bei Lasern im Multimode-Betrieb mit hoher Leistung prädestiniert.

Derartige Kombinierer werden beispielsweise in Laserstrahl-Scannern, wie in der US 5,233,188, der DE-OS 196 21 138 oder US 5,122,659 beschrieben, eingesetzt. In der US 5,233,188 werden Halbleiterlaser über polarisierende Lichtstrahl-Kombinierer zu parallelen Strahlen vereinigt, mittels derer eine Oberfläche gescannt wird. Die DE-OS 196 21 138 beschreibt eine optische Scan- bzw. Abtastvorrichtung, bei der das Licht mehrerer Laserdioden über einen Strahlzusammensetzer vereinigt wird. Die US 5,122,659 beschreibt eine Strahlungsbildauslesevorrichtung für stimulierte Phosphorfolien, bei der zur Erhöhung der Lichtintensität Laserstrahlen mit einem Strahlkombinierer addiert werden.

Bei derartigen Scannern ist es besonders vorteilhaft, polarisierende Lichtstrahl-Kombinierer zu verwenden, da diese im Gegensatz zu herkömmlichen teildurchlässigen Strahlteilern das Licht vollständig transmittieren oder reflektieren, je nach Polarisation. Dadurch kann die gesamte Lichtintensität der kombinierten Laserstrahlen vollständig ausgenutzt werden. Dies ist bei derartigen Geräten sehr wichtig, da hier oft Strahlkombinierer benutzt werden, um eine hohe Intensität des Laserlichts zu erreichen.

Alle Flächen derartiger Lichtstrahl-Kombinierer sind mit dielektrischen Antireflexionsbeschichtungen versehen, so daß eine unbeschränkte Ausrichtung des Kombinierers möglich ist. Trotz der Antireflexionsbeschichtungen hat es sich bei diesen würfelförmigen Strahl-Kombinierern jedoch als nachteilig herauskristallisiert, daß immer noch Rückreflexe der Polarisationsoptik auftreten, die eine stabile Laseremission im Falle einer Laserbestrahlung des Strahl-Kombiniererwürfels stören. Ferner treten Intensitätsfluktuationen auf, welche bei derartigen Vorrichtungen nicht tolerierbar sind, da sie die Bildqualität stark beeinträchtigen.

Es ist Aufgabe der Erfindung, einen polarisierenden Lichtstrahl-Kombinierer insbesondere für Laser-Scanner so auszugestalten, daß Intensitätsfluktuationen nach der Überlagerung von Lichtstrahlen sowie störende Rückreflexe der Polarisationsoptik vermieden werden.

Es ist ferner Aufgabe der Erfindung, Laser-Scanner mit mehreren überlagerten Laserstrahlen so auszugestalten, daß Intensitätsfluktuationen im gescannten Bild möglichst vermieden werden.

Gelöst werden diese Aufgaben durch einen polarisierenden Lichtstrahl-Kombinierer mit der Merkmalskombination von Anspruch 1 und durch Vorrichtungen mit polarisierenden Lichtstrahl-Kombinierern mit den Merkmalen nach Anspruch 9 und 10. Erfindungsgemäß werden die Prismen so aufgebaut und angeordnet, daß die Ebenen der Lichteintritts- und Lichtaustrittsflächen keine parallelen Flächen bilden. Es ist oft auch vorteilhaft, wenn diese Ebenen nicht senkrecht aufeinander stehen. Dadurch treten Rückreflexe nur in sehr geringem Umfang auf.

Vorteilhafterweise sind dadurch Laserstrahl und Lichteintrittsfläche so angeordnet, daß der Laserstrahl nicht mehr senkrecht auf die Lichteintrittsfläche trifft, so daß primäre Rückreflexe nicht zurück in die Laserlichtquelle laufen, so daß wiederum keine Störung der stabilen Laseremission auftritt. Des Weiteren werden die Intensitätsfluktuationen des aus der Lichtaustrittsfläche des zweiten Vieleckprismas austretenden kombinierten Laserlichts auf nahezu Null abgesenkt, da keine oder zumindest nahezu keine störenden Interferenzeffekte an planparallelen Flächen auftreten. Die Interferenzeffekte werden auch als so genannter Etalon-Effekt bezeichnet und können mit einfachen Worten als Interferenz durch Reflexionen an Kanten erklärt werden.

Vorteilhafterweise sind gegenüberliegende Flächen, durch die Licht hindurchtritt oder an denen Licht reflektiert wird, nicht zueinander parallel.

Gemäß einer bevorzugten Ausgestaltungsform der vorliegenden Erfindung sind die Prismen Dreiecksprismen, wobei die Lichtaustrittsfläche des einen Dreiecksprismas zur Lichteintrittsfläche des anderen Dreiecksprismas nicht parallel angeordnet ist. Dies wird dadurch realisiert, daß die Dreiecksprismen entlang der jeweiligen Hypotenusenflächen aneinandergefügt sind, wobei sich gegenüberliegende Schenkelflächen der Dreiecksprismen ungleich lang sind. Grundsätzlich ist es dabei ausreichend, wenn zwei sich gegenüberliegende Schenkelflächen ungleich lang und nicht parallel angeordnet sind. Hierdurch ist automatisch gewährleistet, daß auch die anderen beiden sich gegenüberliegenden Schenkelflächen nicht parallel sind.

Bei einer anderen bevorzugten Ausgestaltungsform sind die Schenkelflächen eines jeden Dreiecksprismas gleich lang. Um zu gewährleisten, daß sich gegenüberliegende Schenkelflächen nicht parallel zueinander verlaufen, müssen in diesem Fall die Dreiecksprismen unterschiedlich sein. Die Länge der Schenkelflächen eines Dreiecksprismas darf nicht mit der Länge der Schenkelflächen des anderen Dreiecksprismas übereinstimmen.

Um eine einfache Herstellung des Dreiecksprismenpaares zu ermöglichen, können identische Glasprismen mit unterschiedlicher Schenkellänge verwendet werden. Diese sollten dann aber jeweils mit den kurzen und langen Seiten aneinanderstoßend verkittet werden.

Anstelle von Dreiecksprismen können beliebige Prismen verwendet werden. Die Erfindung kann ebensogut vorteilhaft bei Prismen mit der Grundfläche eines Vierecks, Fünfecks oder beliebigen Vielecks eingesetzt werden.

Wichtig ist immer, daß zu Lichtflächen, durch die Licht hindurchtritt oder an denen Licht reflektiert wird, keine anderen Prismenflächen gegenüberliegend planparallel angeordnet sind. Prismen mit der Grundfläche eines Vierecks, kombiniert mit Dreiecksprismen, können beispielsweise dann vorteilhaft sein, wenn die zu kombinierenden Laserstrahlen in einer Vorrichtung sinnvollerweise auf derselben Seite des Strahlkombinierers angeordnet sein sollen.

Vorzugsweise ist zwischen den aneinanderliegenden Flächen der beiden Prismen ein mehrschichtiger, dielektrischer Film angeordnet, wodurch ein auf die Lichtaustrittsflächen der beiden Prismen auftreffendes, monochromatisches, unpolarisiertes Licht das Prismenpaar an der Lichtaustrittsfläche polarisiert verläßt, wobei die Polarisierungsrate fast 100% beträgt.

Es ist ebenfalls möglich, die Prismen mit einem Luftspalt unverkittet aneinanderzusetzen.

Um eine möglichst optimale Strahlzusammenführung mit dem erfindungsgemäßen polarisierenden Lichtstrahl-Kombinierer zu erzielen, werden jeweils die beiden Lichteintrittsflächen der Prismen mit kohärentem Licht, insbesondere Laserlicht, bestrahlt.

Schließlich ist es vorteilhaft, daß das die Lichteintrittsfläche des ersten Prismas bestrahlende Licht vor dem Auftreffen auf diese Lichteintrittsfläche durch eine Halbwellenplatte hindurchtritt.

Weitere Einzelheiten und Vorteile der Erfindung ergeben sich aus der Beschreibung verschiedener Ausführungsbeispiele in Verbindung mit den beigefügten Zeichnungen.

Es zeigen:
- Fig. 1: eine schematische Darstellung einer Laserlichtzusammenführung mit einem ersten Ausführungsbeispiel eines erfindungsgemäßen polarisierenden Lichtstrahl-Kombinierers,
- Fig. 2: eine schematische Darstellung des erfindungsgemäßen polarisierenden Lichtstrahl-Kombinierers gemäß dem ersten Ausführungsbeispiel,
- Fig. 3: eine schematische Darstellung des erfindungsgemäßen polarisierenden Lichtstrahl-Kombinierers gemäß einem zweiten Ausführungsbeispiel;
- Fig. 4: eine schematische Darstellung des erfindungsgemäßen polarisierenden Lichtstrahl-Kombinierers gemäß einem dritten Ausführungsbeispiel;
- Fig. 5: eine schematische Darstellung des erfindungsgemäßen polarisierenden Lichtstrahl-Kombinierers gemäß einem vierten Ausführungsbeispiel:
- Fig. 6: eine schematische Darstellung einer Vorrichtung zum Auslesen einer stimulierbaren Phosphorfolie mit einem erfindungsgemäßen polarisierbaren Lichtstrahl-Kombinierer; und
- Fig. 7: eine schematische Darstellung einer Vorrichtung zum Belichten von lichtempfindlichem Material mit zwei erfindungsgemäßen, polarisierenden Lichtstrahl-Kombinierern.

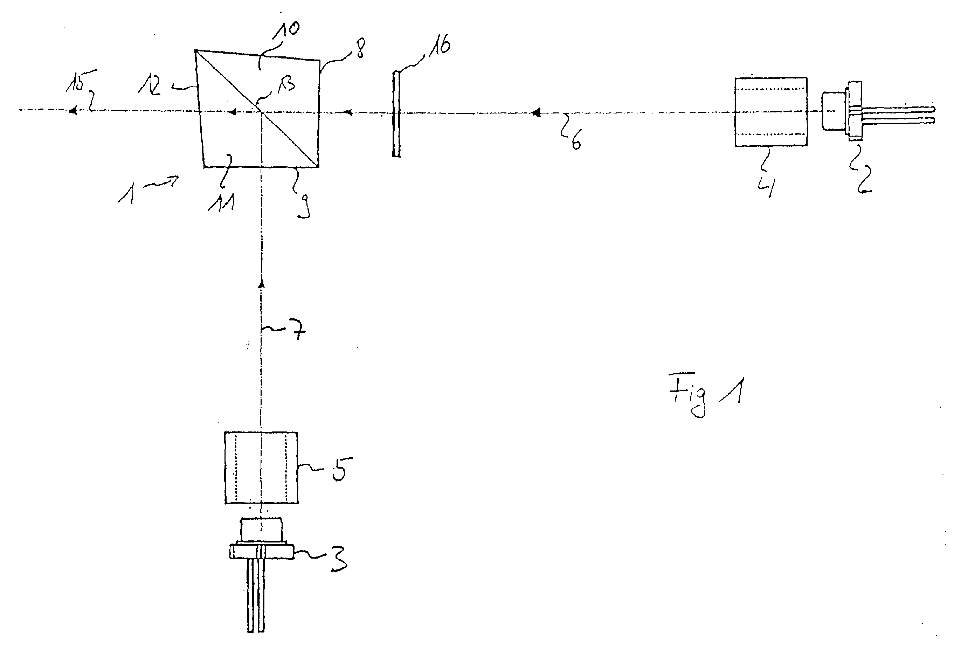

In Fig. 1 ist schematisch ein Ausführungsbeispiel des erfindungsgemäßen polarisierenden Lichtstrahl-Kombinierers 1 dargestellt. Der Lichtstrahl-Kombinierer 1 wird hierbei durch zwei Lichtquellen 2, 3 in Form von Lasern mit jeweils zugeordneten Optiken 4, 5 bestrahlt. Die strichpunktierten Linien 6, 7 zeigen hierbei den Strahlengang vom jeweiligen Laser 2, 3 zum erfindungsgemäßen polarisierenden Lichtstrahl-Kombinierer 1.

Die beiden Laserlichtstrahlen 6, 7 treffen hierbei auf die jeweiligen Lichteintrittsflächen 8, 9 der beiden Dreiecksprismen 10, 11. Die beiden Dreiecksprismen 10, 11 sind an ihrer der jeweiligen Hypotenuse zugeordneten Fläche, welche im Folgenden als Hypotenusenfläche bezeichnet wird, miteinander verkittet. Nach dem Durchtritt des Lichtstrahles 6 durch den polarisierenden Lichtstrahl-Kombinierer 1 bzw. nach der Ablenkung des Lichtstrahles 7 an der Hypotenusenfläche des polarisierenden Lichtstrahl-Kombinierers 1 tritt nunmehr ein kombinierter Lichtstrahl 15 an der Lichtaustrittsfläche 12 des zweiten Dreiecksprismas 11 aus dem polarisierenden Lichtstrahl-Kombinierer 1 aus.

Obgleich in Fig. 1 nicht im Detail dargestellt, ist zwischen den beiden Hypotenusenflächen der beiden Dreiecksprismen 10, 11 ein mehrschichtiger dielektrischer Film 13 angeordnet, so daß bei Bestrahlung des polarisierenden Lichtstrahl-Kombinierers mit beispielsweise monochromatischem, unpolarisiertem Licht dieser Film zu einer Polarisierung des schließlich aus dem Lichtstrahl-Kombinierer austretenden Lichts führt.

Schließlich ist im Strahlengang 6 zwischen Laser 2 und der Lichteintrittsfläche 8 des ersten Dreiecksprismas 10 eine allgemein bekannte Halbwellenplatte 16 angeordnet.

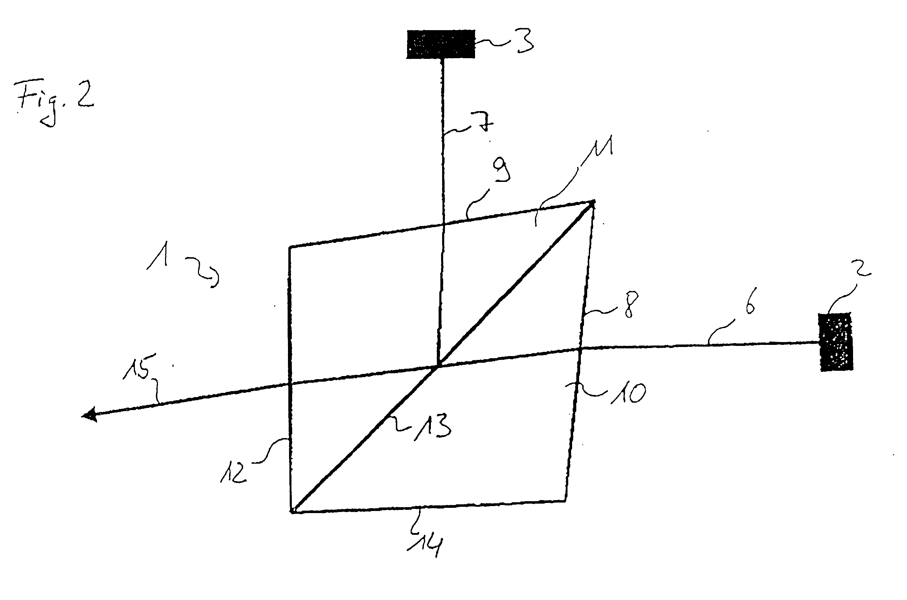

In Fig. 2 ist schematisch der geometrische Aufbau des erfindungsgemäßen Lichtstrahl-Kombinierers 1 in zweidimensionaler Form dargestellt.

Wie bereits in Verbindung mit Fig. 1 erläutert, besteht der polarisierende Lichtstrahl-Kombinierer 1 aus zwei Dreiecksprismen 10, 11, die an ihren jeweiligen Hypotenusenflächen miteinander entlang einer Verkittungslinie verbunden sind. Die beiden Dreiecksprismen 10, 11 weisen den in Fig. 2 dargestellten Schenkeln der Dreiecke zugeordnete Flächen auf, welche im Folgenden als Schenkelflächen bezeichnet werden. Hierbei werden beim zweiten Dreiecksprisma 11 die beiden Schenkelflächen durch die Lichteintrittsfläche 9 sowie die Lichtaustrittsfläche 12 gebildet. Demgegenüber werden die Schenkelflächen des ersten Dreiecksprismas 10 durch die Lichteintrittsfläche 8 sowie eine bisher nicht bezeichnete Schenkelfläche 14 gebildet.

Wie aus Fig. 2 ersichtlich, ist hierbei der Winkel α des jeweiligen Dreiecksprismas 10, 11 zwischen den einander zugeordneten Schenkelflächenpaaren 8, 14 bzw. 9. 10 ungleich 90°. Diese Winkelwahl von α hat gegenüber dem bekannten polarisierenden Lichtstrahl-Kombiniererwürfel den Vorteil, daß einerseits Intensitätsfluktuationen nach der Überlagerung aufgrund von Interferenzeffekten minimiert und störende Rückreflexe der Polarisationsoptik im Hinblick auf eine stabile Laseremission eliminiert werden können.

In Fig. 2 ist die Ebene der Lichteintrittsfläche 8 des ersten Dreiecksprismas 10 nicht zur Ebene der Lichtaustrittsfläche 12 des zweiten Dreiecksprismas 11 parallel. Diese spezielle Ausgestaltungsform - fehlendende Parallelität zwischen Lichteintrittsfläche und Lichtaustrittsfläche - führt zu einer Optimierung des austretenden kombinierten Lichtstrahls 15 aus dem Lichtstrahl-Kombinierer 1.

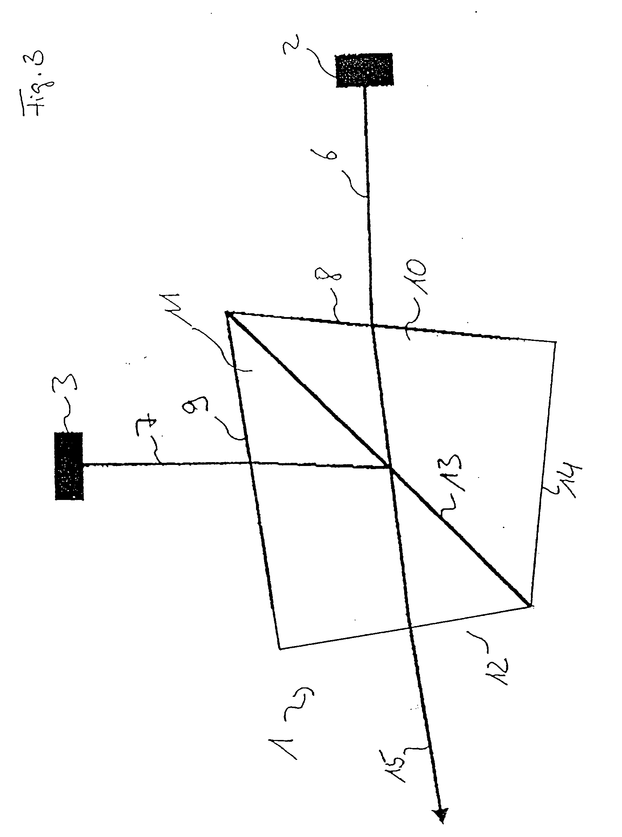

In Figur 3 ist in schematischer Darstellung ein erfindungsgemäßer, polarisierender Lichtstrahl-Kombinierer 1' gemäß einem zweiten Ausführungsbeispiel dargestellt. Dieser Lichtstrahl-Kombinierer 1' unterscheidet sich von dem Lichtstrahl-Kombinierer 1 gemäß dem ersten Ausführungsbeispiel lediglich dadurch, daß die Dreiecksprismen 10, 11 aus rechtwinkligen Dreiecken aufgebaut sind. Aufgrund der unterschiedlichen Schenkellängen von gegenüberliegenden Schenkelflächen sind Lichteintritts- und -austrittsfläche aber dennoch nicht parallel.

Ein weiteres, nicht dargestelltes Ausführungsbeispiel wäre ein aus zwei gleichschenkligen Dreiecken aufgebauter Kombinierer. Hierbei müßte jedes Dreiecksprisma 10, 11 zwei gleich lange Schenkelflächen 9,12, 8,14 aufweisen, wobei die jeweilige Länge der Schenkelflächen der Dreiecksprismen unterschiedlich ist.

Ein weiteres mögliches Ausführungsbeispiel ist ein aus völlig unregelmäßigen Dreiecken bestehender Kombinierer.

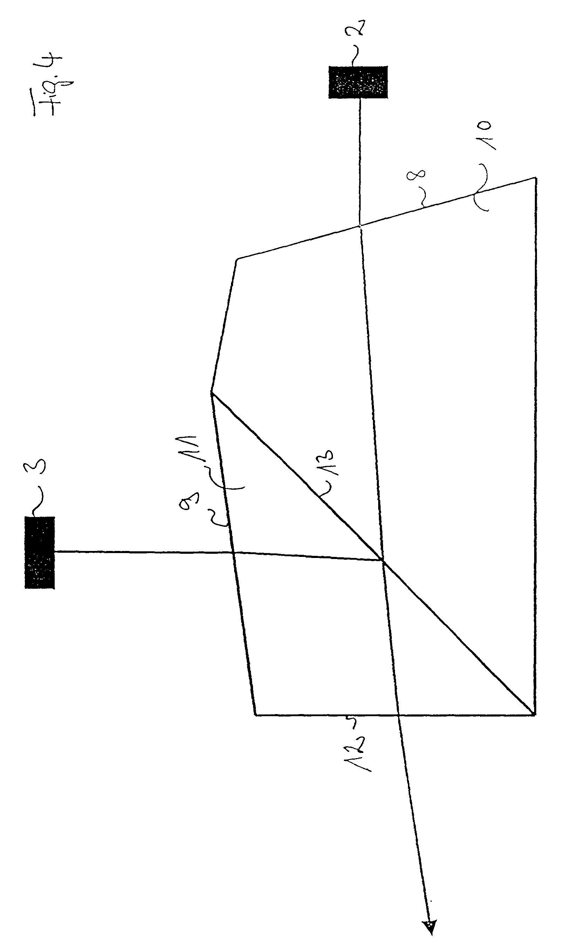

Fig 4 zeigt einen weiteren, erfindungsgemäßen, polarisierenden Lichtstrahl-Kombinierer 1" gemäß einem fünften Ausführungsbeispiel. Bei dieser Ausgestaltungsform des Lichtstrahl-Kombinierers 1" sind die Prismen 10, 11 wiederum entlang der Seite 13 aneinandergefügt, jedoch ist die Grundfläche des Prismas 11 als Dreieck und die Grundfläche des Prismas 10 als Viereck ausgebildet. Ansonsten erfüllt der Lichtstrahl-Kombinierer 1" gemäß dem fünften Ausführungsbeispiel die gleichen Voraussetzungen wie die beiden Lichtstrahl-Kombinierer 1 und 1' entsprechend den ersten beiden Ausführungsbeispielen, d. h. daß die Ebenen von wenigstens einer Lichteintrittsfläche 8, 9 und gegenüberliegender Lichtaustrittsfläche 12 Winkel ungleich 0° miteinander einschließen.

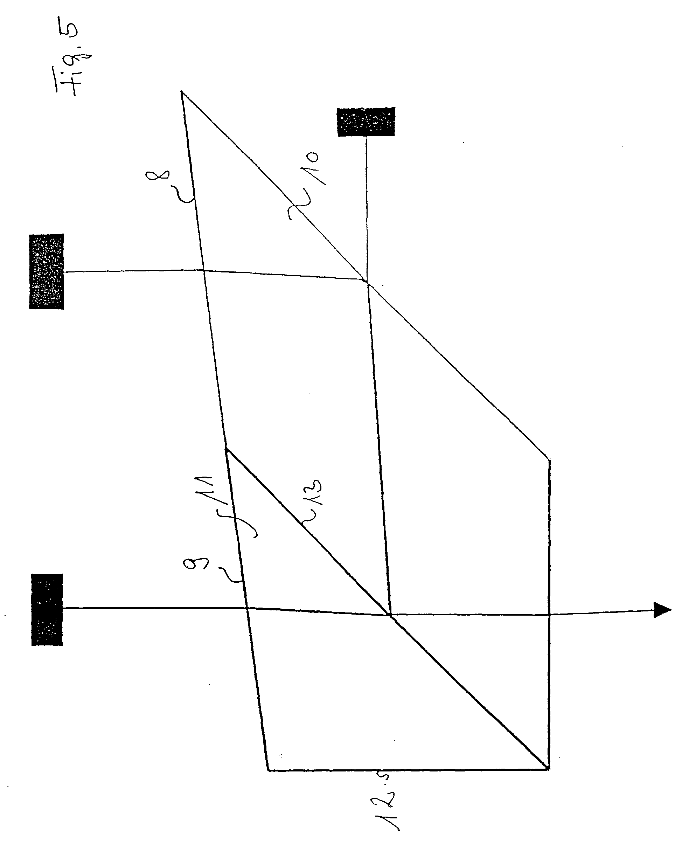

In Fig. 5 ist ein weiteres Ausführungsbeispiel eines erfindungsgemäßen, polarisierenden Lichtstrahl-Kombinieres 1''' dargestellt. Dieser Lichtstrahl-Kombinierer 1''' besteht aus einem Dreiecksprisma 10 sowie einem Vierecksprisma 11. Dieser Lichtstrahl-Kombinierer 1''' unterscheidet sich jedoch von den vorgenannten Lichtstrahl-Kombinierern der Ausführungsbeispiele 1 bis 3 dadurch, daß die Lichtstrahlen dreier Lichtquellen 2, 3a und 3b miteinander kombiniert werden. Dies wird dadurch erreicht, daß zum einen die Lichtstrahlen der Lichtquellen 3a und 3b an der Lichteintrittsfläche 9 des viereckigen Prismas 11 und anschließend dieser kombinierte Strahl mit dem Lichtstrahl der Lichtquelle 2 an der Verbindungsfläche der beiden Prismen 10, 11 kombiniert werden und der kombinierte Lichtstrahl an der Lichtaustrittsfläche 12 aus dem viereckigen Prisma 11 austritt.

Obgleich in den Ausführungsbeispielen des Lichtstrahl-Kombinierers entsprechend den letzten beiden Ausführungsbeispielen nur zwei Formen von Viereckprismen dargestellt sind, können natürlich auch andere Viereck- oder Vieleckformen eingesetzt werden. Dies trifft natürlich nicht nur für die Gestaltungsvielfalt des Prismas 11, sondern auch für die Gestaltungsvielfalt des Prismas 10 zu. Einzig muß die Voraussetzung erfüllt sein, daß die Ebenen von wenigstens einer Lichteintrittsfläche und gegenüberliegender Lichtaustrittsfläche Winkel ungleich 0° miteinander einschließen.

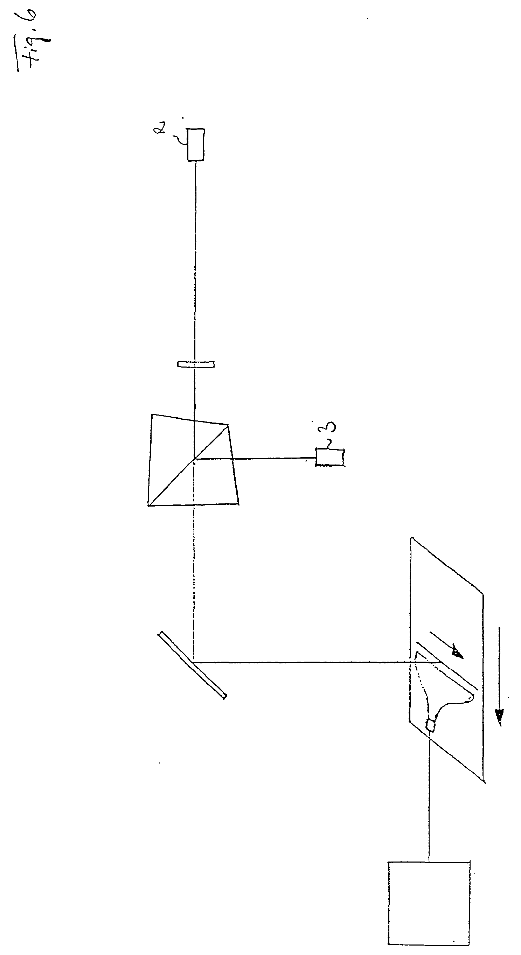

In Fig. 6 ist nunmehr eine Vorrichtung zum Auslesen einer stimulierbaren Phosphorfolie 17 dargestellt. Hierbei wird eine Laserlichtzusammenführung gemäß oben beschriebener Fig. 1 verwendet, wobei natürlich jeder der oben genannten erfindungsgemäßen Lichtstrahl-Kombinierer einsetzbar ist.

Bei der erfindungsgemäßen Vorrichtung zum Auslesen einer stimulierenden Phosphorfolie 17 wird der von den beiden Lichtquellen 2, 3 in Form von Laserlicht kombinierte Lichtstrahl 15 durch einen beweglichen Spiegel 18, etwa einen Schwingspiegel oder ein Polygon, auf die Phosphorfolie 17 umgelenkt. Hierbei wird der kombinierte Lichtstrahl bzw. Laserstrahl 15 entlang der Abtastrichtung B ausgelenkt und bedingt eine Stimulierung der Phosphorfolie 17. Senkrecht zur Abtastrichtung B führt eine nicht dargestellte Transporteinrichtung die Phosphorfolie in Richtung des Pfeils A, so daß durch das Zusammenwirken der Abtastrichtung B sowie der Transportrichtung A ein Auslesen der kompletten stimulierbaren Phosphorfolie 17 möglich ist. Hierbei hat sich als bevorzugt eine Slow-Scan-Transporteinrichtung herauskristallisiert.

Die während der Stimulierung erzeugte Strahlung wird durch einen Lichtleiter 19 zu einem Photomultiplier 20 geleitet sowie das am Photomultiplier 20 erzeugte Ausgangssignal einem Rechner 21 für die Auswertung zugeführt.

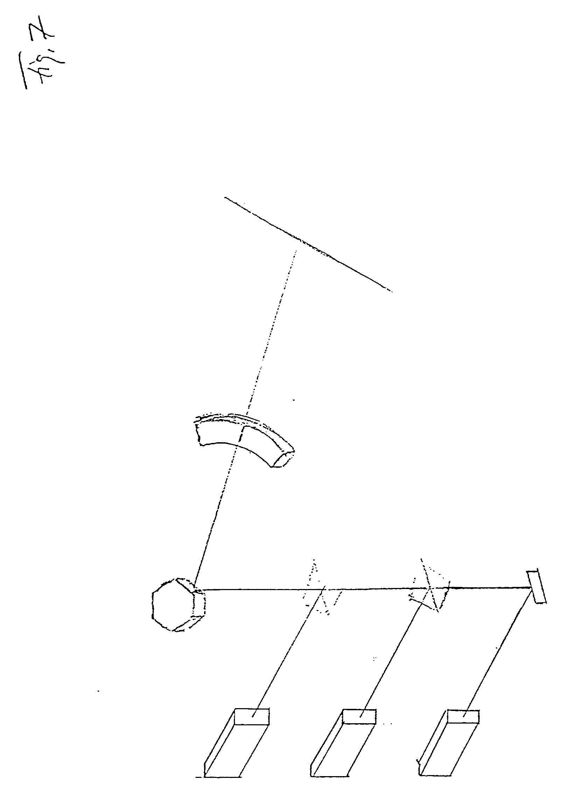

Alternativ kann der oben detailliert erläuterte erfindungsgemäße Lichtstrahl-Kombinierer auch bei einer Vorrichtung zum Belichten von lichtempfindlichem Material eingesetzt werden. Eine derartige Vorrichtung ist schematisch in Fig. 7 dargestellt. Diese Vorrichtung weist beispielsweise drei Farblaser 30 bis 32 etwa mit den Farben rot, grün und blau auf. Hierbei wird in Fig. 7 das Licht des untersten Farblasers 30 - etwa Rotlicht - durch einen Spiegel 33 umgelenkt, mittels eines erfindungsgemäßen Lichtstrahl-Kombinierers 34 mit dem grünen Licht des Farblasers 31 kombiniert und der resultierende rote und grüne Laserlichtstrahl wiederum mittels eines erfindungsgemäßen Lichtstrahl-Kombinierers 35 mit dem Blaulicht des Farblasers 32 kombiniert sowie der sich nunmehr ergebende Lichtstrahl 36 über einen beweglichen Spiegel 37, beispielsweise einen Schwingspiegel oder ein Polygon, durch eine Linse 38 auf ein lichtempfindliches Material 39 geleitet. Als Linse 38 hat sich hierbei eine F-theta-Linse als besonders geeignet herausgestellt.

Die beiden Lichtstrahl-Kombinierer können entsprechend den Ausführungsbeispielen in den Fig. 2 bis 5 ausgebildet sein. Natürlich ist auch eine Kombination von zwei, vier oder mehr Lichtstrahlen denkbar.

Weitere Änderungen oder Modifikationen der oben beschriebenen Ausführungsbeispiele sind möglich, ohne den Schutzumfang der beigefügten Ansprüche zu verlassen.

## Patentansprüche

1. Polarisierender Lichtstrahl-Kombinierer (1) zum Addieren von Laserstrahlen mit wenigstens zwei aneinandergefügten Prismen (10, 11), wobei ein Prisma (10) eine Lichteintrittsfläche (8) und ein Prisma (11) sowohl eine Lichteintrittsfläche (9) als auch eine Lichtaustrittsfläche (12) aufweist, **dadurch gekennzeichnet, daß** die Prismen derart aufgebaut und angeordnet sind, daß die Ebenen von wenigstens einer Lichteintrittsfläche (8, 9) und gegenüberliegender Lichtaustrittsfläche (12) Winkel ungleich 0° miteinander einschließen.

2. Polarisierender Lichtstrahl-Kombinierer (1) nach Anspruch 1, **dadurch gekennzeichnet, daß** die Prismen (10, 11) zwei entlang der jeweiligen Hypotenusenflächen (13) aneinandergefügte Dreiecksprismen sind, wobei gegenüberliegende Schenkelflächen (9, 14) und/oder (8, 12) der Dreiecksprismen ungleich lang sind.

3. Polarisierender Lichtstrahl-Kombinierer (1) nach Anspruch 2, **dadurch gekennzeichnet, daß** die Dreiecksprismen (10, 11) identisch aufgebaut und spiegelsymmetrisch zur Hypotenusenfläche (13) angeordnet sind.

4. Polarisierender Lichtstrahl-Kombinierer (1) nach Anspruch 1, **dadurch gekennzeichnet, daß** jedes der Dreiecksprismen (10, 11) zwei gleich lange Schenkelflächen (9, 12; 8, 14) aufweist, wobei die jeweilige Länge der Schenkelflächen der Dreiecksprismen unterschiedlich ist.

5. Polarisierender Lichtstrahl-Kombinierer (1) nach Anspruch 1, **dadurch gekennzeichnet, daß** die Prismen (10, 11) entlang einer Seite (13) aneinandergefügte Prismen sind, wobei die Grundfläche wenigstens eines Prismas ein Vieleck ist.

6. Polarisierender Lichtstrahl-Kombinierer (1) nach einem der vorhergehenden Ansprüche 1 bis 5, **dadurch gekennzeichnet, daß** die Prismen (10, 11) verkittet sind.

7. Polarisierender Lichtstrahl-Kombinierer (1) nach einem der Ansprüche 1 bis 5, **dadurch gekennzeichnet, daß** zwischen den Prismen (10, 11) ein mehrschichtiger dielektrischer Film angebracht ist.

8. Polarisierender Lichtstrahl-Kombinierer (1) nach einem der Ansprüche 1 bis 5, **dadurch gekennzeichnet, daß** sich zwischen den Prismen ein Luftspalt befindet.

9. Vorrichtung zum Auslesen einer stimulierbaren Phosphorfolie (17) mit mehreren Laserlichtquellen (2, 3), einem polarisierenden Lichtstrahl-Kombinierer (1) zum Addieren der Laserstrahlen, einem beweglichen Spiegel (18) zum Führen des Laserstrahls über die und zum Anregen der Phosphorfolie, einer Lichtleiter-Anordnung (19) zum Sammeln der von der angeregten Phosphorfolie emittierten Strahlung, einem Photomultiplier und einer Bildverarbeitungseinheit, **dadurch gekennzeichnet, daß** der polarisierende Lichtstrahl-Kombinierer (1) zwei aneinandergefügte Prismen (10, 11) aufweist, wobei ein Prisma (10) eine Lichteintrittsfläche (8) und ein Prisma (11) sowohl eine Lichteintrittsfläche (9) als auch eine Lichtaustrittsfläche (12) aufweist und daß die Prismen derart aufgebaut und angeordnet sind, daß wenigstens eine Lichteintrittsfläche (8, 9) und die gegenüberliegende Lichtaustrittsfläche (12) nicht parallel sind.

10. Vorrichtung zum Belichten von lichtempfindlichem Material (39) mit mehreren Laserlichtquellen (2, 3), wobei das Licht der Laserlichtquellen mittels polarisierender Lichtstrahl-Kombinierer (1) zusammenführbar ist, und mit einem beweglichen Spiegel (37) und einer Abbildungsoptik zum Führen des zusammengeführten Laserstrahls über das lichtempfindliche Material (39), **dadurch gekennzeichnet, daß** die polarisierenden Lichtstrahl-Kombinierer (1) zwei aneinandergefügte Prismen (10, 11) aufweisen, wobei ein Prisma (10) eine Lichteintrittsfläche (8) und ein Prisma (11) sowohl eine Lichteintrittsfläche (9) als auch eine Lichtaustrittsfläche (12) aufweist und daß die Prismen derart aufgebaut und angeordnet sind, daß wenigstens eine Lichteintrittsfläche (8, 9) und die gegenüberliegende Lichtaustrittsfläche (12) nicht parallel sind.

11. Vorrichtung nach Anspruch 9 oder 10, **dadurch gekennzeichnet, daß** die Prismen (10, 11) zwei entlang der jeweiligen Hypotenusenflächen (13) aneinandergefügte Dreiecksprismen sind, wobei gegenüberliegende Schenkelflächen (9, 14) und/oder (8, 12) der Dreiecksprismen ungleich lang sind.

12. Vorrichtung nach Anspruch 11, **dadurch gekennzeichnet, daß** die Dreiecksprismen (10, 11) identisch aufgebaut und spiegelsymmetrisch zur Hypotenusenfläche (13) angeordnet sind.

13. Vorrichtung nach Anspruch 9 oder 10, **dadurch gekennzeichnet, daß** jedes der Dreiecksprismen (10, 11) zwei gleich lange Schenkelflächen (9, 12; 8, 14) aufweist, wobei die jeweilige Länge der Schenkelflächen der Dreiecksprismen unterschiedlich ist.

14. Vorrichtung nach Anspruch 9 oder 10, **dadurch gekennzeichnet, daß** die Prismen (10, 11) entlang einer Seite (13) aneinandergefügte Prismen sind, wobei die Grundfläche wenigstens eines Prismas ein Vieleck ist.

15. Vorrichtung nach Anspruch 9 oder 10, **dadurch gekennzeichnet, daß** die Prismen (10, 11) verkittet sind.

16. Vorrichtung nach Anspruch 9 oder 10, **dadurch gekennzeichnet, daß** zwischen den Prismen (10, 11) ein mehrschichtiger dielektrischer Film angebracht ist.

17. Vorrichtung nach Anspruch 9 oder 10, **dadurch gekennzeichnet, daß** sich zwischen den Prismen ein Luftspalt befindet.
